Europäisches Patentamt

European Patent Office

Office européen des brevets

(19)

(11) Numéro de publication : **0 047 722**
**B1**

# (12) FASCICULE DE BREVET EUROPÉEN

(45) Date de publication du fascicule du brevet :
**21.11.85**

(21) Numéro de dépôt : **81830147.5**

(22) Date de dépôt : **24.08.81**

(51) Int. Cl.⁴ : **B 60 L 15/38**

(54) **Dispositif de commande du déplacement de véhicules indépendants à traction électrique le long d'une ligne de circulation, notamment de chariots transporteurs motorisés appartenant à une installation de manutention aérienne.**

(30) Priorité : **09.09.80 IT 6839280**

(43) Date de publication de la demande :
**17.03.82 Bulletin 82/11**

(45) Mention de la délivrance du brevet :
**21.11.85 Bulletin 85/47**

(84) Etats contractants désignés :
**AT BE CH DE FR GB LI LU NL SE**

(56) Documents cités :
**DE-A- 1 763 534**
**DE-A- 1 817 267**
**FR-A- 1 204 660**
**US-A- 3 387 880**

(73) Titulaire : **S.A.F. S.p.a.**
**Regione Cavallo Bianco**
**I-14020 Robella d'Asti (Asti) (IT)**

(72) Inventeur : **Magagna, Sandro**
**Via San Francesco di Sales 144**
**I-10022 Carmagnola Torino (IT)**
Inventeur : **Coppo, Vincenzo**
**Via Roma 78**
**I-14026 Montiglio Asti (IT)**
Inventeur : **Olivero, Gabriele**
**Via Casali Ciresio 1**
**I-14020 Piovà Massaia Asti (IT)**

(74) Mandataire : **Saconney, Piero et al**
**c/o JACOBACCI-CASETTA & PERANI S.n.c. Via Alfieri, 17**
**I-10121 Torino (IT)**

Jouve, 18, rue St-Denis, 75001 Paris, France

## Description

La présente invention se rapporte à un dispositif de commande du déplacement de véhicules indépendants le long d'une ligne de circulation, du type indiqué dans le préambule de la revendication 1.

L'invention a été conçue pour la commande des chariots transporteurs d'une installation de manutention aérienne du type monorail et elle sera décrite dans cette application, bien que sa portée puisse être étendue à toute autre installation dans laquelle plusieurs véhicules indépendants à traction électrique se déplacent le long d'une ligne de circulation définie par un ou plusieurs rails, soit suspendus, soit posés au sol.

Dans les installations de transport rapide comme les installations monorails les chariots sont sujets à tomber en panne et à s'arrêter le long du parcours. Cette situation crée de graves problèmes pour le chariot suivant qui le rattrape, ce chariot pouvant venir heurter l'obstacle constitué par le chariot arrêté.

Pour résoudre ce problème, dans la technique antérieure on utilisait des cellules photo-électriques montées à bord des chariots et capables de déceler l'obstacle à temps et de s'arrêter.

Toutefois, cette solution présente les inconvénients suivants : dans les courbes de la ligne et surtout dans les courbes à petit rayon, le fonctionnement des cellules photo-électriques n'est pas garanti en raison du désaxement mutuel des chariots ; l'encrassage progressif du système optique des cellules photo-électriques réduit très rapidement la sensibilité de ces cellules, en les empêchant de fonctionner correctement.

Dans la technique antérieure on a également fait recours à une solution qui ne présente pas les inconvénients des cellules photoélectriques et selon laquelle la ligne de circulation est subdivisée en segments chacun desquels peut être alimenté en courant électrique indépendamment. Au début et à la fin de chaque segment se trouve un détecteur sous forme d'un interrupteur. Tous ces interrupteurs sont reliés, chacun par un couple de câbles électriques, à un poste central de commande. Ce poste peut être du genre manuel ou bien, dans les installations plus modernes, peut comporter un ordinateur.

Chaque chariot est muni d'un patin qui, lorsque le chariot s'engage sur un segment, actionne l'interrupteur qui se trouve au début de ce segment, ce qui produit la transmission d'un premier signal de position au poste central. Lorsque le chariot quitte le segment, son patin actionne l'interrupteur qui se trouve à la fin du segment, ce qui produit la transmission d'un deuxième signal de position au poste central.

Si le poste est du genre manuel, l'opérateur au poste surveille la position des chariots le long de la ligne sur la base des indications qui lui sont fournies par des voyants qui s'allument et s'éteignent sous la dépendance des signaux de position. De cette façon, si un segment est occupé par un chariot, l'opérateur peut arrêter sur le segment qui précède le chariot qui suit en coupant le courant sur le segment précédent.

Si le poste comporte un ordinateur, c'est celui-ci qui effectue lesdites opérations.

Dans un cas comme dans l'autre le système utilisant des détecteurs le long de la ligne demande la pose de câblages importants et donc coûteux.

Le but de l'invention est celui de réaliser un dispositif de commande dans lequel, pour commander le mouvement des véhicules, on utilise des signaux électriques pouvant être fournis par des appareils simples et peu coûteux ainsi que de réaliser un dispositif de commande permettant de résoudre le problème de l'arrêt d'un chariot qui suit lorsque le chariot qui le précède est arrêté, sans que pour cela il soit nécessaire d'utiliser un poste central de commande et des câblages importants pour relier des détecteurs de position à ce poste.

Selon l'invention ce but est atteint au moyen d'un dispositif de commande du type mentionné dans le préambule de la revendication 1, qui présente les caractéristiques énoncées dans la partie caractérisante de la revendication 1.

Dans un dispositif de commande selon l'invention, les signaux de commande peuvent être obtenus directement, sans élaborations compliquées, à partir d'un réseau d'alimentation à courant alternatif. En particulier, pour obtenir les signaux pulsatoires, il suffit d'utiliser une diode ou un autre élément redresseur.

Ceci est obtenu avec une économie de câblage importante. En effet, chaque segment de la barre de commande, qui correspond à un segment de ligne entre deux détecteurs selon l'art antérieur, ne demande qu'un câble monofil au lieu de deux câbles. En plus, l'installation ne demande aucun poste central de commande manuelle ou comportant un ordinateur.

Il est connu du document US-A-3 387 880 un dispositif de commande du déplacement de véhicules indépendants le long d'une ligne de circulation. Dans ce dispositif la ligne de circulation comporte une barre de commande avec laquelle coopère un organe de prise de commande de chaque véhicule.

Selon le document US-A-3 387 880 les véhicules sont autopropulsés et la ligne n'est pas munie de barres d'alimentation de puissance.

La présence d'une barre de commande subdivisée en segments ainsi que d'un ou deux rails permettrait d'appliquer aux véhicules des signaux de commande pulsatoires ou alternatifs, mais le document US-A-3 387 880 ne prévoit pas cette solution et ne contient aucune indication à propos de l'utilisation d'au moins un signal pulsatoire pour commander la marche d'un véhicule le long du segment considéré et d'un signal à onde complète pour arrêter un véhicule qui suit le long d'un segment précédent, et ceci malgré que sur ce segment précédent soit appliqué également un signal pulsatoire qui, en l'absence du signal à onde complète, commanderait la marche de ce deuxième véhicule.

Il est connu des documents DE-A-1 817 267 et DE-A-1 763 534 le principe de création de trois signaux de discrimination constitués l'un par un signal alternatif à onde complète et les deux autres par des signaux pulsatoires, positifs et négatifs, obtenus à partir du premier, dans le but de commander à distance des fonctions diverses. Ni l'un ni l'autre de ces documents suggère toutefois l'application de ce principe à la commande du déplacement de véhicules indépendants le long d'une ligne. Aussi ces documents ne suggèrent pas l'idée de superposer à un signal pulsatoire commandant la marche d'un véhicule un signal alternatif produisant l'arrêt de ce même véhicule à partir d'un véhicule qui stationne devant lui.

D'autres avantages de l'invention seront mieux compris à la lecture de la description qui va suivre d'un exemple de réalisation et en se référant aux dessins annexés. Parmi ces avantages, on peut citer une logique de l'installation plus rationnelle et moins compliquée, qui comporte un petit nombre de dispositifs électro-mécaniques et électroniques réparties le long de la ligne et qui possède en conséquence une grande fiabilité.

Sur les dessins :

la figure 1 est une vue en élévation de côté d'un fragment d'un tronçon de rail d'une installation de manutention du type monorail et d'un chariot porté par ce rail ;

la figure 2 est un schéma électrique qui illustre le groupe de commande qui se trouve à bord de chaque chariot, qui illustre en outre les barres de la ligne de circulation, ainsi que le moteur de traction du chariot et son frein ;

la figure 3 est un schéma électrique qui illustre deux groupes de commande consécutifs disposés le long de la ligne de circulation.

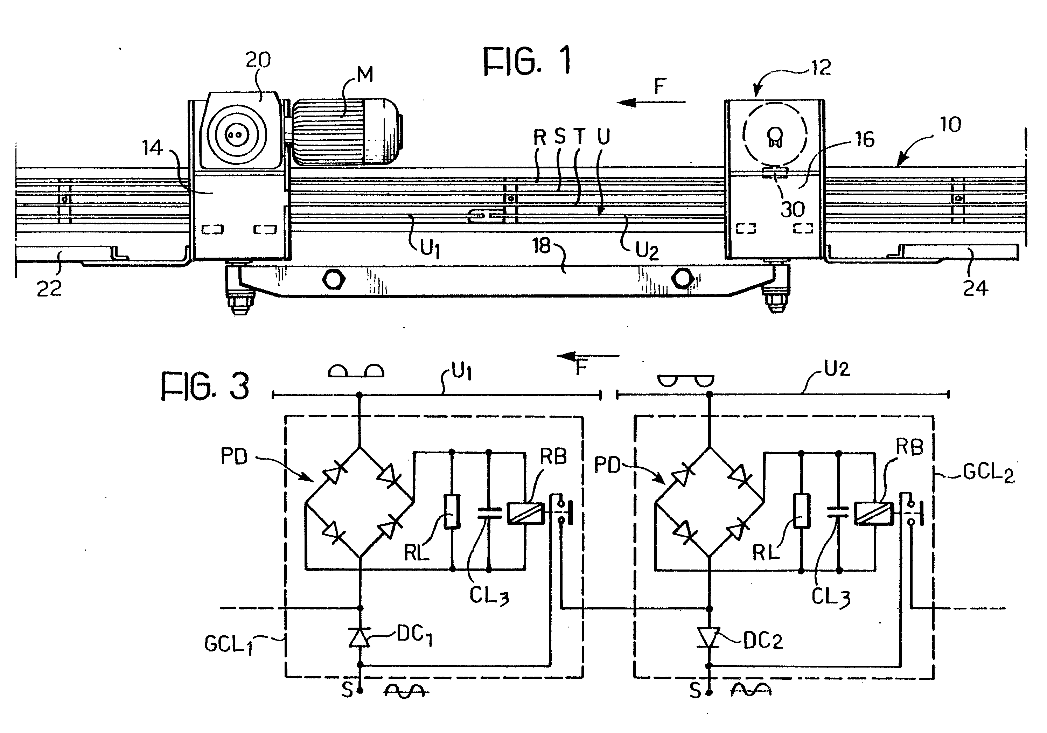

Comme on peut le voir en se reportant à la figure 1, un rail suspendu 10, du type connu à double T, sert de voie de circulation pour des chariots motorisés dont l'un est désigné dans son ensemble par la référence 12. Chaque chariot 12 comprend une structure motrice-porteuse 14 et une structure porteuse 16. Les deux structures 14 et 16 sont reliées entre elles par un élément longitudinal 18 qui, à son tour, supporte une structure porte-charge (non représentée).

La structure motrice-porteuse 14 est muni d'un moteur électrique de traction M qui commande une roue motrice-porteuse (non représentée) par l'intermédiaire d'un réducteur 20.

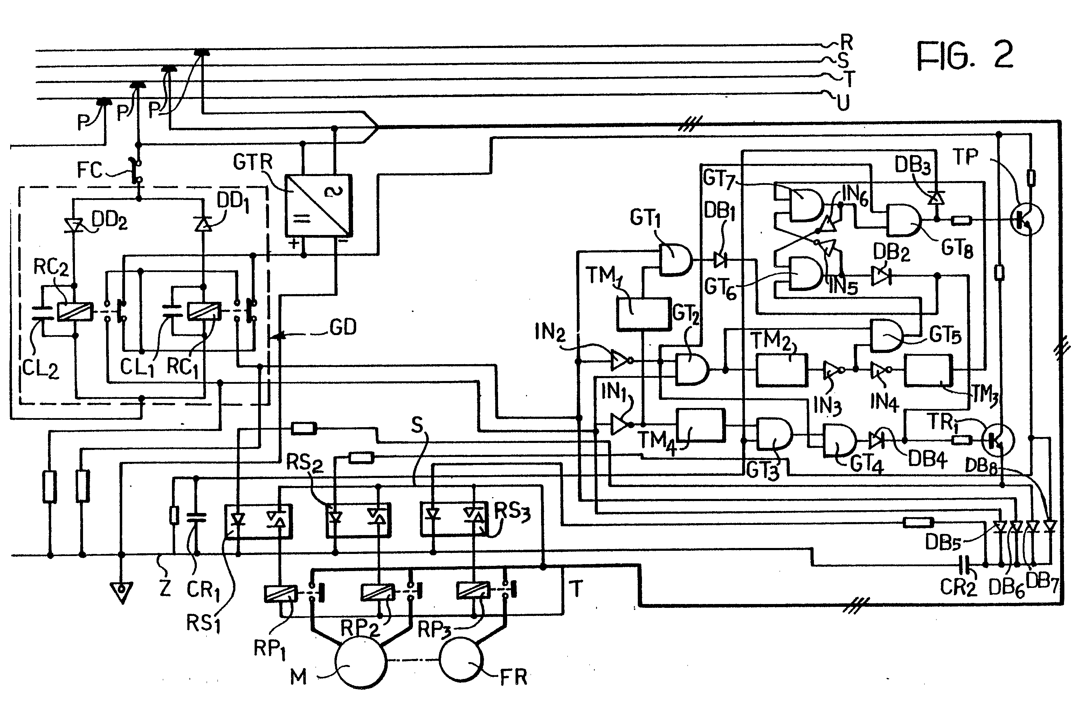

Au moteur M est associé un frein électromagnétique non visible sur la figure 1 mais indiqué schématiquement en FR sur la figure 2.

Le moteur M est du type asynchrone triphasé et le frein FR est également alimenté en courant alternatif. L'alimentation du moteur M et du frein FR est prise sur trois barres d'alimentation de puissance R, S et T. Les barres R, S, T sont montées dans l'un des canaux latéraux du rail 10 en même temps qu'une barre de commande U dont la fonction sera décrite dans la suite. A ce stade de l'exposé, il suffira de dire que la barre de commande U est subdivisée en segments isolés les uns des autres, comme ceux indiqués en $U_1$ et $U_2$.

Le montage des barres R, S, T, U peut être tel qu'il a été illustré et décrit dans la demande de brevet italien de la demanderesse n° 69002-A/79.

La structure motrice-porteuse 14 de chaque chariot 12 est munie de quatre organes de prise revêtant la forme de patins qui glissent respectivement sur les barres R, S, T, U. Ces patins, qui ne sont pas visibles sur la figure 1, sont représentés schématiquement en P sur la figure 2.

Le sens de la marche des chariots tels que le chariot 12 est indiqué par la flèche F sur la figure. La structure motrice-porteuse 14, qui est située sur l'avant du chariot 12 porte un pare-chocs avant 22 et la structure porteuse arrière 16 porte un pare-chocs arrière 24.

On poursuivra maintenant la description en se reportant à la figure 2 et on supposera pour le moment que la barre de commande U n'est pas segmentée.

Trois patins P prennent sur les barres R, S, T le courant alternatif triphasé qui est à basse tension, par exemple à 42 volts, pour des raisons de sécurité. Le courant triphasé pris à bord du chariot sert à la fois à alimenter le moteur M et le frein FR et à alimenter, entre les phases S et T, un groupe transformateur-redresseur GTR à la sortie duquel on obtient un courant continu, par exemple d'une tension de 15 volts.

A bord du chariot, se trouve un groupe de discrimination, désigné dans son ensemble par la référence GD, qui est relié aux patins P qui glissent sur la barre T et sur la barre U. En série avec le groupe GD se trouve un interrupteur de fin de course FC qui est monté sur le pare-chocs avant 22 (figure 1) et qui, ainsi qu'on le comprendra mieux dans la suite, sert à arrêter le chariot si le pare-chocs avant 22 de ce chariot heurte le pare-chocs arrière 24 (voir figure 1) d'un chariot précédent.

Le groupe de discrimination comprend deux circuits électriques en parallèle entre eux. Dans chacun de ces circuits se trouvent en série une diode discriminatrice, $DD_1$ ou $DD_2$ respectivement et l'enroulement d'un relais de commande électro-mécanique à courant continu $RC_1$ et $RC_2$ respectivement.

A chacun de ces relais est associé, en parallèle, un condensateur de nivellement, $CL_1$ ou $CL_2$ respectivement.

Chaque relais $RC_1$, $RC_2$ comprend deux paires de contacts dont l'une est normalement fermée et l'autre normalement ouverte. Sur la figure 2, les contacts ont été représentés dans la position de repos. Leurs interconnexions ressortent clairement de l'examen du dessin.

Les deux diodes discriminatrices DD$_1$ et DD$_2$ sont orientées dans des sens opposés, dans un but qui sera expliqué plus bas.

Au groupe GD est associé un circuit logique électronique ayant pour fonction de commander l'état du moteur M et du frein FR suivant l'état des relais RC$_1$ et RC$_2$.

Ce circuit logique est alimenté en courant continu par le groupe transformateur-redresseur GTR et par l'intermédiaire des contacts des relais RC$_1$ et RC$_2$. En particulier, le négatif du groupe GTR constitue le « zéro » de la logique et il est appliqué à une ligne de zéro Z. La tension positive, par exemple de 15 volts, constitue le « un » logique et est appliquée au circuit logique à travers les contacts des relais RC$_1$ et RC$_2$.

Le circuit logique, dont le schéma est facile à comprendre lorsqu'on examine la figure 2, comprend entre autres, les éléments suivants : des inverseurs désignés par IN$_1$, IN$_2$, ... IN$_6$ ; des portes logiques du type ET, désignées par GT$_1$, GT$_2$, ... GT$_8$ ; des temporisateurs, du type à résistance et capacité, désignés par TM$_1$, TM$_2$, TM$_3$ et TM$_4$ ; des diodes de blocage DB$_1$, DB$_2$, ... DB$_8$ ; des retardateurs comprenant des condensateurs CR$_1$ et CR$_2$ ; des transistors TR$_1$ et TR$_2$ du type NPN ; des relais statiques RS$_1$, RS$_2$, RS$_3$ ; diverses résistances de charge (non désignées par des références).

Le circuit logique décrit ci-dessus est avantageusement réalisé sensiblement entièrement sous la forme d'un circuit intégré sur une carte, avec la technologie « C.MOS. ». Etant donné qu'il s'agit d'un circuit entièrement statique, sa fiabilité est très élevée.

Les relais statiques RS$_1$, RS$_2$, RS$_3$ servent à commander l'alimentation des enroulements de trois relais de puissance électro-mécaniques RP$_1$, RP$_2$ et RP$_3$ respectivement. L'alimentation de ces enroulements s'effectue en courant alternatif et elle est prise entre les phases S et T qui sont fournies par les barres de puissance.

Le moteur de traction M est du type asynchrone triphasé à commutation de pôles (de préférence deux-huit pôles) pour fournir deux vitesses de marche. La première vitesse est commandée par le relais de puissance RP$_1$ et la deuxième par le relais de puissance RP$_2$.

Le relais de puissance RP$_3$ commande le frein électromagnétique FR, qui est lui aussi alimenté en courant alternatif. Lorsque les enroulements du frein RF sont excités, le frein est desserré.

Sur la barre de commande U, on peut appliquer trois types de signaux électriques qui sont pris sur la barre de puissance S ainsi qu'on le verra plus loin dans la description donnée en regard de la figure 3. Ces signaux sont : le signal alternatif à onde complète qui correspond à la tension entre les barres S et T ; un signal pulsatoire positif constitué par les demi-ondes positives du signal à onde complète ; un signal pulsatoire négatif constitué par les demi-ondes négatives dudit signal à onde complète.

On décrira maintenant le fonctionnement de tout le circuit de la figure 2 et le comportement correspondant du moteur M et du frein FR en présence de chacun de ces trois signaux ainsi qu'en l'absence totale de signal sur la barre U, ou encore sous l'effet de l'ouverture de l'interrupteur de fin de course FC.

Sur les tableaux inclus dans la description, on a indiqué les états des entrées E et des sorties U des inverseurs, des portes et des temporisateurs. Pour les portes, les états des deux entrées sont indiqués d'une façon qui correspond à la position que ces entrées occupent sur la figure 2.

Départ du chariot avec présélection de la première vitesse.

On supposera que le signal pulsatoire positif est appliqué sur la barre de commande U, initialement sous tension nulle. La diode discriminatrice DD$_2$ la bloque tandis que la diode discriminatrice DD$_1$ la laisse passer. Le relais de commande RC$_1$ est excité, en provoquant la commutation de ses contacts sur la position de travail.

Dès que les contacts du relais de commande RC$_1$ commutent sur la position de travail, le relais statique RS$_3$ est excité à travers la diode DB$_6$ avec un retard qui correspond au temps de charge du condensateur CR$_2$. Le relais de puissance RP$_3$ est alors excité, en provoquant le desserrage du frein FR.

La situation des contacts du relais de commande RC$_1$ qui a été décrite ci-dessus produit alors dans le circuit logique la situation initiale indiquée au tableau I.

Tableau I

| | IN$_1$ | IN$_2$ | IN$_3$ | IN$_4$ | IN$_5$ | IN$_6$ | GT$_1$ | GT$_2$ | GT$_3$ | GT$_4$ | GT$_5$ | GT$_6$ | GT$_7$ | GT$_8$ | TM$_1$ | TM$_2$ | TM$_3$ | TM$_4$ |
|---|---|---|---|---|---|---|---|---|---|---|---|---|---|---|---|---|---|---|
| E | 0 | 1 | 0 | 1 | 0 | 0 | 1 | 0 | 0 | 0 | 0 | 1 | 0 | 0 | 1 | 0 | 0 | 1 |
| | | | | | | | 0 | 0 | 0 | 0 | 1 | 0 | 1 | 0 | | | | |
| U | 1 | 0 | 1 | 0 | 1 | 1 | 0 | 0 | 0 | 0 | 0 | 0 | 0 | 0 | 0 | 0 | 0 | 0 |

Ainsi qu'on peut le voir, le temporisateur TM$_1$ commence à se charger (le temporisateur TM$_4$ commence également à se charger mais sans aucun effet) et on atteint finalement la situation indiquée au tableau II.

4

Tableau II

| | IN$_1$ | IN$_2$ | IN$_3$ | IN$_4$ | IN$_5$ | IN$_6$ | GT$_1$ | GT$_2$ | GT$_3$ | GT$_4$ | GT$_5$ | GT$_6$ | GT$_7$ | GT$_8$ | TM$_1$ | TM$_2$ | TM$_3$ | TM$_4$ |
|---|---|---|---|---|---|---|---|---|---|---|---|---|---|---|---|---|---|---|
| E | 0 | 1 | 0 | 1 | 0 | 0 | 1 | 0 | 1 | 0 | 0 | 1 | 0 | 0 | 1 | 0 | 0 | 1 |
| | | | | | | | 1 | 0 | 0 | 0 | 1 | 0 | 1 | 0 | | | | |
| U | 1 | 0 | 1 | 0 | 1 | 1 | 1 | 0 | 0 | 0 | 0 | 0 | 0 | 0 | 1 | 0 | 0 | 1 |

A la fin du temps du temporisateur TM$_1$, le transistor TR$_1$ est rendu conducteur par la porte GT$_1$ en excitant le relais de puissance RP$_1$ par l'intermédiaire du relais statique RS$_1$. Ceci provoque la mise en mouvement du moteur M en première vitesse. La marche en première vitesse persiste aussi longtemps que le signal pulsatoire positif reste présent sur la bare de commande U.

Départ du chariot avec présélection de la deuxième vitesse.

On supposera que l'on applique le signal pulsatoire négatif sur la barre de commande U, initialement sous tension nulle. La diode DD$_1$ bloque ce signal tandis que la diode DD$_2$ le laisse passer. Le relais de commande RC$_2$ est excité à travers la diode discriminatrice DD$_2$, en provoquant la commutation de ces contacts sur la position de travail.

Dès que les contacts du relais de commande RC$_2$ commutent sur la position de travail, le relais statique RS$_3$ est excité à travers la diode DD$_5$ et avec un retard correspondant au temps de charge du condensateur CR$_2$. Le relais de puissance RP$_3$ est alors excité, ce qui entraîne le relâchement du frein FR.

Ladite commutation des contacts du relais de commande RC$_2$ produit alors dans le circuit logique la situation initiale indiquée au tableau III.

Tableau III

| | IN$_1$ | IN$_2$ | IN$_3$ | IN$_4$ | IN$_5$ | IN$_6$ | GT$_1$ | GT$_2$ | GT$_3$ | GT$_4$ | GT$_5$ | GT$_6$ | GT$_7$ | GT$_8$ | TM$_1$ | TM$_2$ | TM$_3$ | TM$_4$ |
|---|---|---|---|---|---|---|---|---|---|---|---|---|---|---|---|---|---|---|
| E | 1 | 0 | 1 | 1 | 1 | 0 | 0 | 1 | 0 | 0 | 1 | 1 | 0 | 1 | 0 | 1 | 0 | 0 |
| | | | | | | | 0 | 1 | 0 | 1 | 1 | 1 | 0 | 0 | | | | |
| U | 0 | 1 | 0 | 0 | 0 | 1 | 0 | 1 | 0 | 0 | 1 | 1 | 0 | 0 | 0 | 0 | 0 | 0 |

Ainsi qu'on peut le voir, dans cette phase initiale, le transistor TR$_1$ est débloqué par la porte GT$_6$, en provoquant le départ en première vitesse. Dans le même temps, le temporisateur TM$_2$ commence à se charger.

A la fin de la charge du temporisateur TM$_2$, on atteint la situation indiquée au tableau IV.

Tableau IV

| | IN$_1$ | IN$_2$ | IN$_3$ | IN$_4$ | IN$_5$ | IN$_6$ | GT$_1$ | GT$_2$ | GT$_3$ | GT$_4$ | GT$_5$ | GT$_6$ | GT$_7$ | GT$_8$ | TM$_1$ | TM$_2$ | TM$_3$ | TM$_4$ |
|---|---|---|---|---|---|---|---|---|---|---|---|---|---|---|---|---|---|---|
| E | 1 | 0 | 1 | 0 | 0 | 0 | 0 | 1 | 0 | 0 | 1 | 1 | 0 | 1 | 0 | 1 | 1 | 0 |
| | | | | | | | 0 | 1 | 0 | 1 | 0 | 0 | 1 | 0 | | | | |
| U | 0 | 1 | 0 | 1 | 1 | 1 | 0 | 1 | 0 | 0 | 0 | 0 | 0 | 0 | 0 | 1 | 0 | 0 |

Comme on peut le voir, à la fin de cette deuxième phase il existe un « zéro » à la sortie de la porte GT$_6$ et le transistor TR$_1$ est bloqué, de sorte que le moteur M est mis pour ainsi dire à l'état fou.

La fin du temps de charge du temporisateur TM$_2$ fait débuter le temps de charge du temporisateur TM$_3$. Lorsque ce deuxième temps de charge est terminé, on atteint l'état indiqué au tableau V.

Tableau V

| | IN$_1$ | IN$_2$ | IN$_3$ | IN$_4$ | IN$_5$ | IN$_6$ | GT$_1$ | GT$_2$ | GT$_3$ | GT$_4$ | GT$_5$ | GT$_6$ | GT$_7$ | GT$_8$ | TM$_1$ | TM$_2$ | TM$_3$ | TM$_4$ |
|---|---|---|---|---|---|---|---|---|---|---|---|---|---|---|---|---|---|---|
| E | 1 | 0 | 1 | 0 | 0 | 1 | 0 | 1 | 0 | 0 | 1 | 0 | 1 | 1 | 0 | 1 | 1 | 0 |
| | | | | | | | 0 | 1 | 1 | 1 | 0 | 0 | 1 | 1 | | | | |
| U | 0 | 1 | 0 | 1 | 1 | 0 | 0 | 1 | 0 | 0 | 0 | 0 | 1 | 1 | 0 | 1 | 1 | 0 |

Comme on peut le voir, à la fin du temps du temporisateur $TM_3$, on trouve un « un » à la sortie de la porte $GT_8$ et le transistor $TR_2$ est rendu conducteur, en provoquant l'excitation du relais de puissance $RP_2$ par l'intermédiaire du relais statique $RS_2$. De cette façon, le moteur M passe en deuxième vitesse et reste dans cet état aussi longtemps que le signal pulsatoire négatif persiste sur la barre de commande U.

Passage de la première à la deuxième vitesse.

Si le signal pulsatoire apparaissant sur la barre de commande U passe du positif au négatif, on observe la partie finale de la séquence précédente, avec des états initiaux et finaux qui correspondent à ceux des tableaux IV et V, de sorte qu'il est inutile d'en donner une autre description.

Passage de la deuxième à la première vitesse.

On supposera que, sur la barre de commande U, le signal pulsatoire de commande est commuté du négatif au positif ; la situation des relais de commande $RC_1$ et $RC_2$ est alors celle du départ en première vitesse et on observe la situation indiquée au tableau VI.

Tableau VI

| | $IN_1$ | $IN_2$ | $IN_3$ | $IN_4$ | $IN_5$ | $IN_6$ | $GT_1$ | $GT_2$ | $GT_3$ | $GT_4$ | $GT_5$ | $GT_6$ | $GT_7$ | $GT_8$ | $TM_1$ | $TM_2$ | $TM_3$ | $TM_4$ |
|---|---|---|---|---|---|---|---|---|---|---|---|---|---|---|---|---|---|---|
| E | 0 | 1 | 0 | 1 | 0 | 0 | 0 / 1 | 0 / 0 | 1 / 1 | 0 / 0 | 0 / 1 | 1 / 0 | 0 / 1 | 0 / 0 | 1 | 0 | 0 | 1 |
| U | 1 | 0 | 1 | 0 | 1 | 1 | 0 | 0 | 1 | 0 | 0 | 0 | 0 | 0 | 0 | 0 | 0 | 0 |

Dans ce cas également, les deux temporisateurs $TM_1$ et $TM_4$ commencent à se charger mais le seul de ces temporisateurs à avoir un effet est $TM_1$.

Au début du temps de charge, le transistor $TR_2$ est bloqué, bien qu'avec un retard dû à la présence du condensateur $CR_1$. Ce dernier donne lieu à un « un » à la sortie de la porte $GT_3$ mais sans aucune conséquence.

En définitive, dans cette première phase, le moteur M est mis à l'état fou.

A la fin du temps de charge du temporisateur $TM_1$, on atteint la situation indiquée au tableau VII.

Tableau VII

| | $IN_1$ | $IN_2$ | $IN_3$ | $IN_4$ | $IN_5$ | $IN_6$ | $GT_1$ | $GT_2$ | $GT_3$ | $GT_4$ | $GT_5$ | $GT_6$ | $GT_7$ | $GT_8$ | $TM_1$ | $TM_2$ | $TM_3$ | $TM_4$ |
|---|---|---|---|---|---|---|---|---|---|---|---|---|---|---|---|---|---|---|
| E | 0 | 1 | 0 | 1 | 1 | 0 | 1 / 1 | 0 / 0 | 1 / 1 | 1 / 0 | 0 / 1 | 1 / 0 | 0 / 0 | 0 / 0 | 1 | 0 | 0 | 1 |
| U | 1 | 0 | 1 | 0 | 0 | 1 | 1 | 0 | 1 | 0 | 0 | 0 | 0 | 0 | 1 | 0 | 0 | 1 |

Le transistor $TR_1$ est finalement débloqué par la porte $GT_1$ et la première vitesse du moteur M est reprise et persiste aussi longtemps que le signal pulsatoire positif persiste sur la barre U.

Arrêt en deuxième vitesse.

Le fonctionnement du circuit logique est identique dans les trois cas suivants : absence de signal sur la barre U ; ouverture de l'interrupteur sur la fin de course FC ; application du signal pulsatoire à onde complète sur la barre de commande U.

Dans ces trois cas, un « zéro » est appliqué aux entrées des inverseurs $IN_1$ et $IN_2$.

Le transistor $TR_2$ est bloqué et le moteur M passe à l'état fou. Dans le même temps, la présence de la diode de blocage $DB_3$ maintient un « un » sur l'entrée inférieure (sur la figure 2) de la porte $GT_3$. Le temporisateur $TM_1$ commence à se charger et, à la fin de son temps de charge, on obtient la situation indiquée au tableau VIII.

Tableau VIII

| | $IN_1$ | $IN_2$ | $IN_3$ | $IN_4$ | $IN_5$ | $IN_6$ | $GT_1$ | $GT_2$ | $GT_3$ | $GT_4$ | $GT_5$ | $GT_6$ | $GT_7$ | $GT_8$ | $TM_1$ | $TM_2$ | $TM_3$ | $TM_4$ |
|---|---|---|---|---|---|---|---|---|---|---|---|---|---|---|---|---|---|---|
| E | 0 | 0 | 0 | 1 | 0 | 0 | 0 / 0 | 1 / 0 | 0 / 1 | 0 / 1 | 0 / 1 | 1 / 0 | 0 / 1 | 1 / 0 | 1 | 0 | 0 | 1 |
| U | 1 | 1 | 1 | 0 | 1 | 1 | 0 | 0 | 0 | 0 | 0 | 0 | 0 | 0 | 0 | 0 | 0 | 0 |

Il est fait en sorte que le temps de décharge du condensateur $CR_1$ aussi bien que le temps de décharge du condensateur $CR_2$ soient plus longs que le temps de charge du temporisateur $TM_4$ de sorte que, à la fin du temps de charge de ce dernier, d'une part le frein FR est encore excité et, d'autre part, les deux entrées de la porte $GT_3$ sont toutes deux à « un ». De cette façon, la porte $GT_4$ est débloquée et elle débloque à son tour le transistor $TR_1$, en remettant le moteur M en première vitesse et en maintenant le frein FR excité à travers la diode de blocage $DB_7$. Cette situation est indiquée au tableau IX.

Tableau IX

| | $IN_1$ | $IN_2$ | $IN_3$ | $IN_4$ | $IN_5$ | $IN_6$ | $GT_1$ | $GT_2$ | $GT_3$ | $GT_4$ | $GT_5$ | $GT_6$ | $GT_7$ | $GT_8$ | $TM_1$ | $TM_2$ | $TM_3$ | $TM_4$ |
|---|---|---|---|---|---|---|---|---|---|---|---|---|---|---|---|---|---|---|
| E | 0 | 0 | 0 | 1 | 0 | 0 | 0 / 1 | 1 / 0 | 1 / 1 | 1 / 1 | 0 / 1 | 1 / 0 | 0 / 1 | 1 / 0 | 1 | 0 | 0 | 1 |
| U | 1 | 1 | 1 | 0 | 1 | 1 | 0 | 0 | 1 | 1 | 0 | 0 | 0 | 0 | 1 | 0 | 0 | 1 |

Après une brève période de marche en première vitesse (de quelques secondes), la décharge du condensateur $CR_1$ bloque les portes $GT_3$ et $GT_4$ et le transistor $TR_1$, de sorte que l'alimentation du moteur M est interrompue et la décharge du condensateur $CR_2$ produit la désexcitation du frein FR, avec freinage consécutif du chariot.

Cette situation est indiquée au tableau X.

Tableau X

| | $IN_1$ | $IN_2$ | $IN_3$ | $IN_4$ | $IN_5$ | $IN_6$ | $GT_1$ | $GT_2$ | $GT_3$ | $GT_4$ | $GT_5$ | $GT_6$ | $GT_7$ | $GT_8$ | $TM_1$ | $TM_2$ | $TM_3$ | $TM_4$ |
|---|---|---|---|---|---|---|---|---|---|---|---|---|---|---|---|---|---|---|
| E | 0 | 0 | 0 | 1 | 0 | 0 | 0 / 1 | 1 / 0 | 1 / 0 | 0 / 1 | 0 / 1 | 1 / 0 | 0 / 1 | 1 / 0 | 1 | 0 | 0 | 1 |
| U | 1 | 1 | 1 | 0 | 1 | 1 | 0 | 0 | 0 | 0 | 0 | 0 | 0 | 0 | 1 | 0 | 0 | 1 |

Ainsi qu'on peut le remarquer, le passage de la deuxième vitesse à la première vitesse qui se produit avant l'arrêt du chariot évite un arrêt brusque qui, dans de nombreux cas, est indésirable et peut même être dangereux, par exemple lorsque le chariot porte des charges suspendues oscillantes et qui, par inertie, pourraient dépasser le chariot et venir heurter la charge d'un chariot précédent arrêté.

Arrêt en première vitesse.

La situation initiale est celle indiquée au tableau IX et la situation finale celle indiquée au tableau X, de sorte qu'on peut considérer comme inutile de donner une nouvelle description du fonctionnement.

Un circuit logique tel que celui de la figure 2 permet de commander le mouvement des chariots le long de la ligne au moyen de groupes de commande de lignes tels que ceux indiqués en $GCL_1$ et $GCL_2$ sur la figure 3.

La barre de commande U des figures 1 et 2 est en réalité subdivisée en plusieurs segments consécutifs dont deux sont indiqués en $U_1$ et $U_2$ sur la figure 3. Ces segments peuvent avoir différentes longueurs. Ainsi qu'on le comprendra mieux dans la suite, ces longueurs sont imposées par la nécessité qu'un chariot ne vienne heurter un chariot arrêté et, d'autre part, par le type de parcours de la ligne. Par exemple, dans un parcours en courbe, il peut être avantageux que les chariots circulent en première vitesse tandis que, dans un parcours en ligne droite, il peut être avantageux que les chariots se déplacent en deuxième vitesse.

Sur la figure 3, le sens de la marche des chariots est encore indiqué par F. Le segment $U_1$ et le groupe de commande $GCL_1$ correspondent à la marche en première vitesse, par exemple le long d'une courbe ; le segment $U_2$ et le groupe de commande $GCL_2$ correspondent à la deuxième vitesse, par exemple le long d'un tronçon rectiligne de la ligne.

Le groupe de commande $GCL_1$ est relié, d'une part, à la barre d'alimentation de puissance S et, d'autre part, au segment $U_1$. Dans cette connexion, on trouve une diode de commande $DC_1$ orientée de manière à transformer le signal à onde complète, représenté en bas sur la figure 3, en le signal pulsatoire positif représenté en haut à gauche sur la figure 3.

De même, le groupe $GCL_2$ est relié, d'une part, à la même barre de puissance S et d'autre part, au segment $U_2$ de manière à appliquer à celui-ci le signal de commande pulsatoire négatif. Ce dernier est représenté en haut dans la partie de droite de la figure 3.

Dans tous les groupes de commande tels que les groupes $GCL_1$ et $GCL_2$, est interposé, entre la diode de commande $DC_1$ et $DC_2$ respectivement et le segment de commande $U_1$ ou $U_2$ respectivement, un pont

de redresseur PD, à la diagonale de tension continue duquel est connecté un enroulement de relais de blocage électromécanique à courant continu RB. L'enroulement du relais RB est en parallèle avec un condensateur de nivellement $CL_3$ et avec une résistance RL de charge.

Le relais RB est muni d'une paire de contacts normalement ouverts. Ces contacts sont interposés dans une ligne électrique qui aboutit, d'une part, à la barre de puissance S et, d'autre part, à un point compris entre la diode de commande $DC_2$ et le segment de barre de commande précédent. Dans le cas de la figure 3, ce point intermédiaire est compris entre la diode de ocmmande $DC_2$ et le segment $U_2$.

Si aucun chariot ne se trouve sur l'un des segments tels que $U_1$ et $U_2$, il ne passe pas de courant entre ce segment et la barre S, de sorte que l'enroulement en série du relais RB est désexcité et que ses contacts sont ouverts.

Si un chariot se trouve sur un segment tel que $U_2$ et $U_1$, l'une des bobines de ses relais de commande $RC_1$ et $RC_2$ (figure 2) est excitée si le chariot est en mouvement tandis que les deux bobines sont excitées si le chariot est arrêté. On observe donc un passage de courant entre la barre de puissance S et le segment de barre de commande. Cette absorption de courant provoque une différence de tension aux bornes de la résistance de charge RL, avec excitation consécutive du relais RB et fermeture de ses contacts. Si l'on suppose que le chariot en question se trouve sur le segment $U_1$ de la figure 3, la fermeture des contacts du relais de blocage RB applique le signal de commande alternatif à onde complète provenant de la barre S en aval de la diode $DC_2$ de sorte que, par l'intermédiaire des deux branches du pont PD correspondant, ce signal à onde complète est appliqué au segment $U_2$. Lorsqu'un chariot survient sur ce segment, les deux relais $RC_1$ et $RC_2$ de ce chariot (figure 2) sont excités et il se produit alors la séquence d'arrêt en deuxième vitesse ou en première vitesse.

Si le chariot qui précède (qui se trouve dans ce cas sur le segment $U_1$) est effectivement arrêté, le chariot qui suit s'arrête également sur le segment $U_2$. Si, au contraire, le chariot qui précède est en mouvement et quitte le segment, la temporisation des séquences d'arrêt et, en particulier, de celle d'arrêt en deuxième vitesse est de nature à faire reprendre la marche au chariot qui suit sans que ce chariot n'atteigne l'arrêt complet.

En cas de panne de l'installation, l'arrêt est de toute façon garanti par l'interrupteur de fin de course FC de la figure 2, ainsi qu'on l'a déjà décrit plus haut.

En ce qui concerne l'arrêt des chariots, on peut provoquer cet arrêt à partir d'un tableau de commande en interrompant l'envoi des signaux à tous les segments de la barre de commande ou à tous les segments sélectionnés.

Bien entendu, diverses modifications pourront être apportées par l'homme de l'art au dispositif qui vient d'être décrit uniquement à titre d'exemple non limitatif, sans sortir du cadre de l'invention.

**Revendications**

1. Dispositif de commande du déplacement de véhicules indépendants le long d'une ligne de circulation (10), du type dans lequel la ligne (10) est munie de barres (R, S, T) d'alimentation électrique de puissance en courant alternatif sur lesquelles chaque véhicule (12) peut prendre un courant pour l'alimentation de son moteur électrique de traction (M) par l'intermédiaire d'organes de prise de puissance, ce dispositif étant caractérisé en ce que la ligne de circulation comprend outre les barres d'alimentation de puissance (R, S, T), une barre de commande (U) subdivisée, le long de la ligne de circulation, en segments consécutifs ($U_1$, $U_2$) isolés les uns des autres, avec lesquels coopère un organe de prise de commande de chaque véhicule, en ce qu'il est prévu des moyens de commande de ligne ($GCL_1$, $GCL_2$) permettant d'appliquer sélectivement au moins deux des trois signaux électriques de commande suivants entre les segments ($U_1$, $U_2$) de la barre de commande (U) et l'une des barres de puissance (S) : un signal alternatif à onde complète, un signal pulsatoire positif constitué par les demi-ondes positives du signal à onde complète ; un signal pulsatoire négatif constitué par les demi-ondes négatives du signal à onde complète ; en ce qu'il est prévu sur chaque véhicule des moyens de commande de bord associés à l'organe de prise de commande et destinés à provoquer au moins les états de marche et d'arrêt du véhicule, par connexion ou déconnexion du moteur de traction (M) de ce véhicule par rapport aux organes de prise de puissance, selon le signal de commande reçu, chaque groupe de commande de ligne ($GCL_1$, $GCL_2$) comprenant un élément redresseur de commande ($DC_1$, $DC_2$) interposé entre ladite barre de puissance (S) et le segment correspondant de la barre de commande ($U_1$, $U_2$) et un relais de blocage (RB) qui comprend deux contacts normalement ouverts et des moyens d'excitation interposés en série entre l'élément redresseur ($DC_1$, $DC_2$) et le segment de barre de commande ($U_1$, $U_2$) qui servent à exciter le relais (RB) en fermant les contacts de ce relais lorsque les moyens d'excitation de ce relais sont traversés par un courant en raison de la présence d'un véhicule sur le segment considéré, les contacts du relais (RB) étant interposés dans une ligne qui aboutit d'une part, à ladite barre de puissance (S) et, d'autre part, à un point compris entre l'élément redresseur ($DC_1$, $DC_2$) et les moyens d'excitation du groupe de commande ($GCL_2$) qui est associé à un segment précédent ($U_2$) de la barre de commande, considéré dans le sens de la marche du véhicule le long de la ligne de circulation, pour appliquer le signal de commande à onde complète à ce segment précédent ($U_2$), afin d'arrêter un véhicule qui y parvient lorsqu'un véhicule se trouve sur le segment précité ($U_1$), qui fait suite audit segment précédent ($U_2$).

2. Dispositif de commande suivant la revendication 1, caractérisé en ce que le moteur électrique de traction (M) de chaque véhicule est du type à deux vitesses, les moyens de commande de ligne (GCL$_1$, GCL$_2$) sont destinés à appliquer sélectivement les trois signaux de commande précités à la barre de commande (U ; U$_1$, U$_2$) et les moyens de commande de bord sont destinés à provoquer, suivant le signal de commande reçu, l'état de marche du véhicule en première vitesse, son état de marche en deuxième vitesse et son état d'arrêt.

3. Dispositif de commande suivant la revendication 1 ou 2, caractérisé en ce que les moyens de commande de bord sont également capables de provoquer l'état d'arrêt du véhicule en l'absence de signal de commande sur la barre de commande (U ; U$_1$, U$_2$).

4. Dispositif de commande suivant la revendication 3, caractérisé en ce que les moyens de commande de bord comprennent deux relais (RC$_1$, RC$_2$) dont chacun est interposé, en série avec un élément redresseur de discrimination (DD$_1$, DD$_2$) entre l'organe de prise de commande et l'organe de prise de puissance correspondant, les deux éléments redresseurs de discrimination (DD$_1$, DD$_2$) étant orientés l'un en sens inverse de l'autre et en ce que chaque relais (RC$_1$, RC$_2$) comprend des contacts de commutation connectés de manière à provoquer l'un ou l'autre des états de marche de véhicule, selon le ralais traversé par le courant de l'un ou de l'autre des signaux de commande pulsatoires et à provoquer l'état d'arrêt du véhicule aussi bien si les deux relais (RC$_1$, RC$_2$) sont traversés par les composantes pulsatoires correspondantes positive ou négative, du signal de comande à onde complète, que si aucun des relais n'est traversé par un courant.

5. Dispositif de commande suivant la revendication 1, caractérisé en ce que chaque relais de blocage (RB) est du type électromécanique et que ces moyens d'excitation comprennent un enroulement d'excitation en parallèle avec une résistance de charge (RL).

6. Dispositif de commande suivant la revendication 5, caractérisé en ce que l'enroulement d'excitation du relais de blocage (RB) est connecté entre l'élément redresseur de commande correspondant (DC$_1$, DC$_2$) et le segment correspondant (U$_1$, U$_2$) à travers un pont de redresseurs (PD) de manière à être alimenté en courant continu indépendamment de la forme d'onde du signal de commande appliqué au segment considéré.

7. Dispositif de commande suivant l'une quelconque des revendications précédentes, caractérisé en ce que les véhicules sont équipés de moteurs de traction (M) du type asynchrone triphasé à deux vitesses à commutation de pôles, la ligne de circulation comprend trois barres (R, S, T) d'alimentation du courant alternatif triphasé et les signaux de commande appliqués à la barre de commande (U ; U$_1$, U$_2$) sont pris sur une des barres d'alimentation (S).

## Claims

1. Device for the control of the movement of independent vehicles along a traffic line (10), of the type in which the line (10) is fitted with alternating current electrical power supply rails (R, S, T) on which each vehicle (12) can take a current for the supply of its electric traction motor (M) by means of power pick-up devices, this device being characterised in that the traffic line includes in addition to the power supply rails (R, S, T), a control rail (U) sub-divided, along the traffic line, into consecutive segments (U$_1$, U$_2$) insulated from each other, which work in conjunction with a control pick-up device on each vehicle, and in that line control means (GCL$_1$, GCL$_2$) are provided enabling the selective application of at least two of the following three electrical control signals between the segments (U$_1$, U$_2$) of the control rail (U) and one of the power rails (S) : a full-wave alternating current signal, a positive pulses signal formed by the positive half-waves of the full-wave signal ; a negative pulses signal formed by the negative half-waves of the full-wave signal ; and in that each vehicle is provided with on-board means of control associated with the control pick-up device and intended to cause at least the go and stop functions of the vehicle by the connection or disconnection of the traction motor (M) of that vehicle with respect to the power pick-up devices, according to the control signal received, each line control unit (GCL$_1$, GCL$_2$) including a control rectifier component (DC$_1$, DC$_2$) connected between the said power rail (S) and the corresponding segment of the control rail (U$_1$, U$_2$) and an inhibiting relay (RB) which includes two normally open contacts and means of excitation connected in series between the rectifier component (DC$_1$, DC$_2$) and the segment of control rail (U$_1$, U$_2$) which serve to excite the relay (RB), closing the contacts of that relay when the means of excitation of that relay carry a current because of the presence of a vehicle on the segment concerned, the contacts of the relay (RB) being connected into a line which ends, on the one side, at the said power rail (S) and, on the other side, at a point contained between the rectifier component (DC$_1$, DC$_2$) and the means of excitation of the control unit (GCL$_2$) which is associated with a previous segment (U$_2$) of the control rail, considered in the direction of travel of the vehicle along the traffic line, in order to apply the full-wave control signal to that previous segment (U$_2$), in order to stop a vehicle which arrives on it when a vehicle is on the afore-mentioned segment (U$_1$), which follows the said previous segment (U$_2$).

2. Control device according to Claim 1, characterised in that the electric traction motor (M) of each vehicle is of the two-speed type, the line control means (GCL$_1$, GCL$_2$) are intended to selectively apply the three aforementioned control signals to the control rail (U ; U$_1$, U$_2$), and the on-board means of control are intended to cause, depending on the control signal received, the movement of the vehicle in first speed, its movement in second speed and its stopped condition.

3. Control device according to Claim 1 or 2, characterised in that the on-board means of control are also capable of causing the stopped condition of the vehicle in the absence of a control signal on the control rail (U ; $U_1$, $U_2$).

4. Control device according to Claim 3, characterised in that the on-board means of control include two relays ($RC_1$, $RC_2$) each of which is connected in series with a discrimination rectifier component ($DD_1$, $DD_2$) between the control pick-up device and the corresponding power pick-up device, the two discrimination rectifier components ($DD1$, $DD_2$) being connected in opposite directions to each other and in that each relay ($RC_1$, $RC_2$) includes switching contacts connected in order to cause one or other of the movement states of the vehicle, according to the current of one or other of the pulsating control signals passing through the relay and to cause the stopped state of the vehicle if the two relays ($RC_1$, $RC_2$) pass the corresponding positive or negative pulse components of the full-wave control signal, and also if none of the relays passes a current.

5. Control device according to Claim 1, characterised in that each inhibiting relay (RB) is of the electro-mechanical type and in that these means of excitation include an excitation winding in parallel with a load resistor (RL).

6. Control device according to Claim 5, characterised in that the excitation winding of the inhibiting relay (RB) is connected between the corresponding control rectifier component ($DC_1$, $DC_2$) and the corresponding segment ($U_1$, $U_2$) through a rectifier bridge (PD) such that it is supplied with direct current in a way which is independent of the waveform of the control signal applied to the segment concerned.

7. Control device according to any of the previous claims, characterised in that the vehicles are fitted with traction motors (M) of pole-switching two-speed three-phase asynchronous type, the traffic line includes three three-phase alternating current power supply rails (R, S, T) and the control signals applied to the control rail (U ; $U_1$, $U_2$) are taken from one of the power supply rails (S).

**Patentansprüche**

1. Steuereinrichtung zum Bewegen unabhängiger Fahrzeuge längs einer Fahrbahn (10), mit elektrischen Fahrstromleitern (R, S, T) zur Einspeisung von Wechselstrom, an denen jedes Fahrzeug (12) mit Hilfe von Fahrstromabnehmerorganen Strom zur Speisung seines elektrischen Antriebsmotors (M) entnehmen kann, dadurch gekennzeichnet, daß die Fahrbahn (10) außer den Fahrstromleitern (R, S, T) einen Steuerstromleiter (U) besitzt, der längs der Fahrbahn in aufeinanderfolgende, gegeneinander isolierte Abschnitte ($U_1$, $U_2$) unterteilt ist, mit denen ein Steuerstromabnehmerorgan der einzelnen Fahrzeuge zusammenarbeitet, daß Fahrbahn-Steuereinheiten ($GCL_1$, $GCL_2$) vorgesehen sind, mittels derer zwischen die Abschnitte ($U_1$, $U_2$) des Steuerstromleiters (U) und einen der Fahrstromleiter (S) wenigstens zwei der drei folgenden elektrischen Steuersignale anlegbar sind : ein Vollwellen-Wechselstromsignal, ein von den positiven Halbwellen des Vollwellen-Wechselstromsignals gebildetes positives pulsierendes Signal, ein von den negativen Halbwellen des Vollwellen-Wechselstromsignals gebildetes negatives pulsierendes Signal, daß an jedem Fahrzeug dem Steuerstromabnehmerorgan zugeordnete Bord-Steuereinheiten vorgesehen sind, die durch das Verbinden oder Abtrennen des Antriebsmotors (M) dieses Fahrzeugs mit den bzw. von den Fahrstromabnehmerorganen in Abhängigkeit von dem empfangenen Steuersignal zumindest das Fahrzeug in den Fahrzustand und den Haltezustand versetzen können, daß jede der Fahrbahn-Steuereinheiten ($GCL_1$, $GCL_2$) ein Steuergleichrichterelement ($DC_1$, $DC_2$) enthält, das zwischen dem genannten Fahrstromleiter (S) und dem entsprechenden Abschnitt des Steuerstromleiters ($U_1$, $U_2$) und einem Blockierrelais (RB) angeordnet ist, welches zwei normalerweise geöffnete Kontakte sowie Erregungsmittel besitzt, die in Reihe zwischen dem Steuergleichrichterelement ($DC_1$, $DC_2$) und dem Abschnitt ($U_1$, $U_2$) des Steuerstromleiters angeordnet sind und zur Erregung des Blockierrelais (RB) dienen, indem sie dessen Kontakte schließen, wenn seine Erregungsmittel infolge des Anwesenheit des Fahrzeugs auf dem betrachteten Abschnitt von einem Strom durchflossen sind, und daß die Kontakte des Blockierrelais (RB) in eine Leitung eingefügt sind, die zwischen dem genannten Fahrstromleiter (S) und einem Punkt zwischen den Steuergleichrichterelement ($DC_1$, $DC_2$) und den Erregungsmitteln derjenigen Fahrbahn-Steuereinheit ($GCL_2$) verläuft, die einem in Bezug auf die Fahrtrichtung des Fahrzeugs längs der Fahrbahn vorangehenden Abschnitt ($U_2$) des Steuerstromleiters zugeordnet ist, wobei die genannten Kontakte des Blockierrelais (RB) das Vollwellen-Wechselstromsignal an diesen vorangehenden Abschnitt ($U_2$) anlegen, um ein dort erscheinendes Fahrzeug anzuhalten, wenn ein anderes Fahrzeug sich auf dem vorgenannten Abschnitt ($U_1$) befindet, der auf den erwähnten vorangehenden Abschnitt ($U_2$) folgt.

2. Steuereinrichtung nach Anspruch 1, dadurch gekennzeichnet, daß die elektrischen Antriebsmotoren (M) der Fahrzeuge Zweigeschwindigkeits-Motor sind, daß die Fahrbahn-Steuereinheiten ($GCL_1$, $GCL_2$) so ausgebildet sind, daß sie die drei genannten Steuersignale selektiv an den Steuerstromleiter (U ; $U_1$, $U_2$) anlegen, und daß die Bord-Steuereinheiten so ausgebildet sind, daß sie in Abhängigkeit von dem empfangenen Steuersignal ein Fahrzeug entweder in den Fahrzustand mit der ersten Geschwindigkeit, den Fahrzustand mit der zweiten Geschwindigkeit oder in den Haltezustand versetzen.

3. Steuereinrichtung nach Anspruch 1 oder 2, dadurch gekennzeichnet, daß die Bord-Steuereinheiten so ausgebildet sind, daß sie ein Fahrzeug in den Haltezustand versetzen, wenn auf dem Steuerstromleiter ($U$ ; $U_1$, $U_2$) kein Steuersignal anliegt.

4. Steuereinrichtung nach Anspruch 3, dadurch gekennzeichnet, daß die Bord-Steuereinheit zwei Relais ($RC_1$, $RC_2$) beinhaltet, von denen jedes in Reihe mit einem Diskriminatorgleichrichterelement ($DD_1$, $DD_2$) zwischen dem Steuerstromabnehmerorgan und dem entsprechenden Fahrstromabnehmerorgan angeordnet ist, daß die beiden Diskriminatorgleichrichterelemente ($DD_1$, $DD_2$) mit zueinander entgegengesetzter Polung angeordnet sind, und daß jedes Relais ($RC_1$, $RC_2$) Umschaltekontakte besitzt, die derart in die Schaltung eingefügt sind, daß sie das Fahrzeug in den einen oder den anderen Fahrzustand versetzen, je nachdem, ob das Relais von dem Strom des einen oder des anderen der pulsierenden Steuersignale durchflossen ist, oder in den Haltezustand, wenn beide Relais ($RC_1$, $RC_2$) von den entsprechenden positiven oder negativen pulsierenden Komponenten des Vollwellen-Wechselstromsignals durchflossen sind oder keines des Relais stromdurchflossen ist.

5. Steuereinrichtung nach Anspruch 1, dadurch gekennzeichnet, daß die Blockierrelais ($RB$) elektromagnetische Relais sind und daß die Erregungsmittel eine Erregerwicklung umfassen, der ein Lastwiderstand ($RL$) parallel geschaltet ist.

6. Steuereinrichtung nach Anspruch 5, dadurch gekennzeichnet, daß die Erregerwicklung des Blockierrelais ($RB$) über eine Gleichrichterbrücke ($PD$) zwischen das zugeordnete Steuergleichrichterelement ($DC_1$, $DC_2$) und den entsprechenden Abschnitt ($U_1$, $U_2$) geschaltet ist, derart daß es unabhängig von der Wellenform des an dem betrachteten Abschnitt anliegenden Steuersignals von Gleichstrom gespeist wird.

7. Steuereinrichtung nach einem der vorhergehenden Ansprüche, dadurch gekennzeichnet, daß die Antriebsmotoren ($M$) der fahrzeuge Dreiphasen-Asynchronmotoren mit zwei Geschwindigkeiten und Polkommutierung sind, und daß die fahrbahn drei Fahrstromleiter ($R$, $S$, $T$) zur Einspeisung von Dreiphasen-Wechselstrom umfaßt und die an dem Steuerstromleiter ($U$ ; $U_1$, $U_2$) anliegenden Steuersignale über einen der Fahrstromleiter ($S$) abgegriffen werden.

11

FIG. 1

FIG. 3

0 047 722

# FIG. 2